# EUROPÄISCHE PATENTSCHRIFT

(11) **EP 3 138 764 B1**
(45) Veröffentlichungstag und Bekanntmachung des Hinweises auf die Patenterteilung: **15.08.2018**
(21) Anmeldenummer: 16187096.9
(22) Anmeldetag: 02.09.2016
(51) Int. Cl.: B62J 7/00, B62J 7/08, F16B 2/02

(54) **GEPÄCKHALTEVORRICHTUNG UND MOTORRAD MIT EINER SOLCHEN**
CARGO HOLDER DEVICE AND MOTORCYCLE WITH SUCH
DISPOSITIF DE FIXATION DE BAGAGE ET MOTO LE COMPRENANT

(30) Priorität: 04.09.2015 DE 202015104721 U
(43) Veröffentlichungstag der Anmeldung: 08.03.2017
(73) Patentinhaber: SW-MOTECH GmbH & Co. KG, 35282 Rauschenberg (DE)
(72) Erfinder: RHIEL, Fabian, 35274 Kirchhain (DE)
(74) Vertreter: Patentanwälte Olbricht Buchhold Keulertz

(56) Entgegenhaltungen:
- EP-A2- 2 168 853
- WO-A2-2011/069496
- WO-A2-2011/116757
- DE-C- 724 639

## Beschreibung

Die Erfindung betrifft eine Gepäckhaltevorrichtung gemäß dem Oberbegriff von Anspruch 1 und ein Motorrad mit einer solchen nach Anspruch 15.
Gepäckhaltevorrichtungen dienen dazu, Gepäckstücke wie Seitentaschen, Seitenkoffer, Tanktaschen, Top-Cases und ähnliches sicher an einem Motorrad oder ähnlichen Zweirädern, Trikes und Quads befestigen zu können.
Aus DE 103 42 223 A1 ist beispielsweise eine Gepäckhaltevorrichtung bekannt, die ein komfortables ankoppeln und entkoppeln der Gepäckstücke am Motorrad erlauben soll. Hierfür werden in einer Ausführungsform Aufnahmepilze am Motorrad festgelegt. Diese korrespondieren mit je einem einzelnen Grundkörper aus umgeformtem Blech an einem Gepäckstück, wobei der Grundkörper einen Schlitz aufweist. Der Schlitz verfügt über einen beidseitigen Hinterschnitt für den Aufnahmepilz. Außerdem sind das erste Ende des Schlitzes offen und das zweite Ende geschlossen ausgebildet. Hierdurch ist der Aufnahmepilz quer zu seiner Pilzachse formschlüssig vom ersten Ende bis zum zweiten Ende in den ersten Schlitz einschiebbar.
Die Aufnahmepilze werden also permanent mit Werkzeug am Motorrad festgelegt, wohingegen die einzelnen Grundkörper mit Werkzeug permanent am Gepäckstück montiert werden. Eine permanente Festlegung bedeutet, dass der Grundkörper an dem Gepäckstück montiert bleibt, auch wenn die Gepäckhaltevorrichtung gelöst wird, bzw. die Aufnahmepilze an dem Motorrad verbleiben, wenn die Gepäckhaltevorrichtung gelöst wird. Zur alltäglichen Gepäckbefestigung und Gepäckentnahme wird die werkzeuglos montierbare Kopplung zwischen den Grundkörpern und den Aufnahmepilzen genutzt.
Problematisch ist hierbei, eine komplexe Rotationsbewegung, mit welcher vier solcher Koppelstellen aus jeweils einem Grundkörper und je einem Aufnahmepilz miteinander verbunden werden müssen. Dies ist hakelig, erfordert Geschick und stellt bei fehlerhafter Montage ein Sicherheitsrisiko dar, denn das Gepäckstück kann sich von dem Motorrad lösen. Letzteres kann auch bei korrekter Montage in bestimmten Fahrsituationen geschehen, denn die Pilzköpfe können aus den Schlitzen herausrutschen, wenn ungünstige Relativbeschleunigungen zwischen Gepäckstück und Aufnahmepilzen auftreten.
Aufgabe der Erfindung ist es daher, eine Gepäckhaltevorrichtung und ein Motorrad mit einer solchen zu entwickeln, mit der eine komfortable und sichere Montage von Gepäckstücken an Motorrädern möglich ist, die jedoch weiterhin unauffällig bei demontiertem Gepäck ist, um die Optik des Motorrads nicht über die Maßen negativ zu beeinflussen. Die Vorrichtung soll außerdem kompakt, leicht und kostengünstig sein. Dokument WO2011/069496 stellt den nächsten Stand der Technik dar und offenbart die Präambel des Anspruchs 1. Hauptmerkmale der Erfindung sind im kennzeichnenden Teil von Anspruch 1 und Anspruch 15 angegeben. Ausgestaltungen der Gepäckhaltevorrichtung nach Anspruch 1 sind Gegenstand der Ansprüche 2 bis 14.
Die Erfindung betrifft eine Gepäckhaltevorrichtung zum temporären Befestigen, insbesondere ohne Werkzeug, von Gepäckstücken, insbesondere von Koffern, Seitenkoffern oder Taschen, an einem Motorrad, mit einem ersten Aufnahmepilz mit einer Pilzachse und zur permanenten Festlegung, insbesondere mit Werkzeug, an einem Motorrad, und mit einem Grundkörper zur permanenten Festlegung an einem Gepäckstück. Der Grundkörper bildet einen ersten Schlitz mit beidseitigem Hinterschnitt aus, insbesondere für den ersten Aufnahmepilz. Dabei ist das erste Ende des ersten Schlitzes offen und das zweite Ende geschlossen ausgebildet. Der erste Aufnahmepilz ist quer zu seiner Pilzachse formschlüssig vom ersten Ende bis zum zweiten Ende in den ersten Schlitz einschiebbar. Darüber hinaus weist die Gepäckhaltevorrichtung ein Verriegelungselement auf, das um eine Drehachse, die parallel zur Pilzachse des ersten Aufnahmepilzes ausgerichtet ist (dies betrifft insbesondere die Montageausrichtung), drehbar am Grundkörper gelagert ist. Das Verriegelungselement weist einen Verriegelungsabschnitt auf, mit dem das Verriegelungselement in einer Verriegelungsstellung mit dem ersten Aufnahmepilz in Eingriff bringbar und der erste Aufnahmepilz am zweiten Ende des Schlitzes arretierbar ist.

Das erfindungsgemäße Verriegelungselement verhindert zunächst auf einfache Weise ein Herausrutschen des Aufnahmepilzes aus dem Schlitz, sodass das Gepäckstück in jeder Fahrsituation sicher gehalten wird. Eine Verriegelung kann nach der Montage auch einfach durch Zug am Gepäckstück kontrolliert werden. Zumindest der erste Aufnahmepilz ist dann erwiesener Maßen korrekt mit dem ersten Schlitz in Eingriff. Das Verriegeln eines Verriegelungselementes kann in vielen Ausgestaltungsvarianten außerdem bereits bei der Gepäckanbringung haptisch, optisch oder akustisch erfasst werden. Außerdem ist das Verriegelungselement bei einem Zug des Gepäckstücks in Richtung des ersten Endes des ersten Schlitzes selbstsperrend.

In einer bevorzugten Ausführungsform weist der Verriegelungsabschnitt eine Vertiefung auf, mit welcher der erste Aufnahmepilz in der Verriegelungsstellung gemeinsam mit dem zweiten Ende des ersten Schlitzes formschlüssig umgreifbar ist. Besonders bevorzugt ist der Verriegelungsabschnitt, in einer geodätisch vertikalen Richtung gesehen, unterhalb der Drehachse des Verriegelungselements angeordnet. Damit verteilt sich die Belastung auf den Verriegelungsabschnitt durch den Aufnahmepilz, weil eine Auflage mit mehreren Kontaktpunkten, vorzugsweise einer Kontaktlinie und besonders bevorzugt einer Kontaktfläche bereitgestellt wird. Außerdem wird der Aufnahmepilz fest umschlossen, sodass Beschleunigungskräfte auf das Gepäckstück nicht zu dessen Verrutschen führen.

Gemäß einer speziellen Variante des Verriegelungselements ist die Vertiefung in der Verriegelungsstellung entlang des ersten Schlitzes sowie in deren Zentrum am tiefsten ausgestaltet. Hierdurch sichert sich das Verriegelungselement bei Belastung durch den ersten Aufnahmepilz selbst in der Verriegelungsstellung, insbesondere, weil der Aufnahmepilz zur tiefsten Stelle der Vertiefung strebt.

Der Grundkörper besteht vorzugsweise aus Kunststoff. Dieser ist leicht und es besteht wenig Verletzungsgefahr für einen Träger eines am Grundkörper befestigten Gepäckstücks. Der oder die Aufnahmepilze bestehen bevorzugt aus Metall. Dieses ist verschleißfest. Aus gleichem Grund besteht das Verriegelungselement bevorzugt aus Metall. Optional kann das Verriegelungselement jedoch auch aus Kunststoff bestehen.

Weiterhin ist eine optionale Ergänzung derart möglich, dass das Verriegelungselement einen Betätigungsabschnitt aufweist, mit dem das Verriegelungselement um die Drehachse von der Verriegelungsstellung in eine Freigabestellung drehbar ist. Damit kann ein Nutzer die Verriegelung durch ein Betätigen des Betätigungsabschnitts einfach lösen. In einer speziellen Ausführungsform steht der Betätigungsabschnitt über den Grundkörper hinaus, insbesondere in der Normalenebene zur Drehachse. Durch das Hinausstehen kann der Betätigungsabschnitt einfach angefasst und betätigt werden. Außerdem ist er gut sichtbar und die Position des Verriegelungselements erkennbar. Eine Positionierung in der Normalenebene zur Drehachse ermöglicht die Anordnung und Betätigung des Betätigungselements in einem schmalen Spalt zwischen dem Gepäckstück und dem Motorrad. Dies schützt vor versehentlicher Betätigung und ist optisch ansprechend.

Zu diesen Vorteilen trägt auch eine Ausführungsvariante bei, nach der das Verriegelungselement im Bereich des Verriegelungsabschnitts als Flachkörper in der Normalenebene zur Drehachse ausgebildet ist. In dieser Ebene wirken außerdem die wesentlichen vom Verriegelungselement aufzunehmenden Kräfte, und die breitere Erstreckung in der Ebene führt zu hoher Stabilität.

In einer bevorzugten Ausgestaltung ist das Verriegelungselement in der Ebene des ersten Schlitzes um die Drehachse drehbar. Hierdurch gelingt es, das Verriegelungselement bis in die Vertiefung bzw. den Hinterschnitt des Aufnahmepilzes bzw. hinter den Pilzkopf zu bewegen. Das Verriegelungselement kann auf diese Weise bei Belastung nicht über den Pilzkopf des Aufnahmepilzes springen. Hierzu bietet sich ein optionales Design an, bei dem der vom ersten Schlitz ausgebildete Hinterschnitt im Bereich des Verriegelungselements eine Ausnehmung aufweist, in der das Verriegelungselement in der Verriegelungsstellung liegt und den Hinterschnitt ergänzt. Die Ausnehmung muss hierbei nicht die komplette Höhe der den Pilzkopf hintergreifenden Kante umfassen. Vielmehr ist es zu bevorzugen, dass der Verriegelungsabschnitt auf einer um die Ausnehmung zurückgesetzten Kante aufliegt.

Eine solche Kante oder aber andere Stützelemente sollten das Verriegelungselement entgegen der Zugrichtung des Aufnahmepilzes stützen. Hierdurch können vom Verriegelungselement auch Kräfte in Richtung der Drehachse aufgenommen werden.

In einer alternativen und besonders stabilen Ausgestaltung ist das Verriegelungselement in einer Ebene benachbart zum ersten Schlitz um die Drehachse drehbar, insbesondere in einer Ebene hinter dem ersten Schlitz, und der erste Aufnahmepilz weist am freien Ende einen zapfenartigen Fortsatz auf, der in die Ebene des Verriegelungselements ragt. Damit wird der Aufnahmepilz stabil im Schlitz geführt und für das Verriegelungselement ist ein zusätzlicher Angriffspunkt am Fortsatz geschaffen. Optional kann auch der Fortsatz einen Pilzkopf aufweisen, sodass ein Doppelpilzkopf vorliegt.

Des Weiteren sieht eine Variante der Erfindung vor, dass das Verriegelungselement mit einer Feder in Richtung der Verriegelungsstellung kraftbelastet ist. Damit kann das Verriegelungselement nur durch aktives Entgegenwirken entriegelt werden. Außerdem erkennt der Nutzer immer die Verriegelungsstellung und kann in vielen Ausführungsformen bei der Gepäckanbringung haptisch, optisch und akustisch erfassen, wenn die Verriegelungsstellung eingenommen wird.

Eine kostengünstige Ausgestaltung wird erreicht, wenn das Verriegelungselement einteilig, insbesondere monolithisch, ausgebildet ist. Damit ist der Aufbau sehr einfach und umfasst wenige Bauteile.

Besonders komfortabel gelingt die Gepäckanbringung am Motorrad bei einer speziellen Ausführungsform, nach der das Verriegelungselement eine Entriegelungsrampe aufweist, welche den ersten Schlitz in der Verriegelungsstellung in Richtung des ersten Endes derart überspannt, dass das Verriegelungselement durch ein Einschieben des ersten Aufnahmepilzes in den ersten Schlitz von der Verriegelungsstellung um die Drehachse in die Freigabestellung drehbar ist. Damit ist eine Betätigung des Verriegelungselements bei dem Einschieben des Aufnahmepilzes nicht erforderlich.

Weiterhin ist eine optionale Ausgestaltung vorgesehen, bei der die Drehachse so zum zweiten Ende des ersten Schlitzes angeordnet ist, dass der erste Aufnahmepilz in der Verriegelungsstellung zwischen dem Verriegelungsabschnitt und der Drehachse liegt. Damit kann zum einen der Verriegelungsabschnitt eng um den Aufnahmepilz geschwenkt werden. Zum anderen wirken vor allem Zugbelastungen vom Aufnahmekopf auf das Verriegelungselement, welches hierdurch einfacher als Flachkörper ausgestaltbar ist.

Zur Komfortsteigerung beim Anbringen des Gepäckstücks ist eine Ergänzung möglich, nach welcher der erste Schlitz am ersten Ende ein Führungselement aufweist, welches den ersten Aufnahmepilz zum ersten Ende führt. Ein solches Führungselement kann als einseitige Schiene ausgeführt sein, die vorzugsweise einen geodätisch obenliegenden Anschlag für den Pilzkopf ausbildet. Alternativ kann das Führungselement auch beidseitige Führungsschienen aufweisen, die vorzugsweise ein Öffnungsdelta ausbilden. In einer speziellen Variante bildet das Führungselement einen Hinterschnitt für den ersten Aufnahmepilz aus. Bei einem Aufsetzen des Gepäckstücks mit dem Grundkörper auf den Aufnahmepilz gleitet letzterer dann mühelos von dem Führungselement in den ersten Schlitz.

Ferner sieht eine Ausführungsform der Gepäckhaltevorrichtung vor, dass das erste Ende des ersten Schlitzes in einer Montageausrichtung im Wesentlichen geodätisch nach unten geöffnet ist und das zweite Ende geodätisch schräg nach oben oder geodätisch horizontal ausgerichtet ist. Die nach unten weisende Öffnung erlaubt ein motorisch einfaches Absenken des Gepäckstücks bei dem Anbringen, das von der Schwerkraft unterstützt wird. Das Gepäckstück hält also unmittelbar nach dem Absenken und muss zunächst nicht zwingend weiterbewegt werden. Der sich anschließende schräge oder horizontale Verlauf wirkt insbesondere sprunghaften Beschleunigungskräften entgegen, z.B. bei Überfahren von Unebenheiten. Das Verriegelungselement muss bei einer solchen Ausrichtung insbesondere Fahrzeugbeschleunigungen und Fahrzeugverzögerungen aufnehmen, die weniger abrupt sind. Bevorzugt weist das zweite Ende des Schlitzes in Fahrtrichtung. Es kann so Abbremskräften entgegenzuwirken, die insbesondere bei Unfällen sehr hoch sind.

Optional ergänzt sein kann die Gepäckhaltevorrichtung durch ein Schloss, mit dem die Rotation des Verriegelungselements relativ zum Grundkörper um die Drehachse absperrbar ist. Damit kann das Gepäck auch bei Abwesenheit vom Motorrad an diesem verbleiben, denn es ist ein Diebstahlschutz vorhanden.

Eine weitere Ausgestaltungsoption sieht vor, dass die Gepäckhaltevorrichtung wenigstens einen zweiten Aufnahmepilz mit einer Pilzachse zur permanenten Festlegung an einem Motorrad aufweist, wobei jede der Pilzachsen parallel zur Pilzachse des ersten Aufnahmepilzes ausgerichtet ist, und wobei jeder weitere Aufnahmepilz in einen eigenen Schlitz im Grundkörper einschiebbar ist, dessen erstes Ende offen ausgebildet ist. Damit wird eine statisch bestimmte Verbindung erhalten. Bevorzugt sind drei oder vier Aufnahmepilze vorgesehen. Diese sollten nicht alle auf einer geraden angeordnet sein.

Bevorzugt sind die ersten Enden der Schlitze im gleichen Muster angeordnet wie die Aufnahmepilze. Damit können alle Aufnahmepilze gleichzeitig in die ersten Enden eingeführt werden. Ein einfaches Einschieben ohne Drehbewegungen gelingt bei einer näheren Ausgestaltung, bei der die ersten Enden der weiteren Schlitze die gleiche Ausrichtung wie das erste Ende des ersten Schlitzes aufweisen. Auch die weiteren Schlitze sollten jeweils ein geschlossenes zweites Ende aufweisen. Damit können Kräfte von den Aufnahmezapfen an mehreren Positionen in den Grundkörper eingeleitet werden und umgekehrt. Zur Erzielung einer einfachen Anbringungskinematik bietet sich ein Design an, bei dem die zweiten Enden der Schlitze im gleichen Muster angeordnet sind wie die Aufnahmepilze. In einer speziellen Ausführungsform die hierzu ebenfalls beiträgt, bilden der erste und die weiteren Schlitze jeweils einen gleichartigen und gleichausgerichteten Kulissenverlauf für den ersten und die weiteren Aufnahmepilze aus.

In einer speziellen Ausführungsform der Gepäckhaltevorrichtung ist den weiteren Schlitzen kein Verriegelungselement zugeordnet. Damit ist die Verriegelung auf wenige Bauteile beschränkt, kostengünstig und einfach in der Handhabung.

Eine optionale Ergänzung der Gepäckhaltevorrichtung kann in einem Trägerrahmen bestehen, der permanent am Motorrad festlegbar ist, und an dem die Aufnahmepilze festgelegt sind. Ein solcher Trägerrahmen kann individuell für Motorräder angepasst sein. Der Rest der Gepäckhaltevorrichtung ist für alle Motorradtypen einheitlich ausgestaltbar.

Eine hohe Steifigkeit der Gepäckhaltevorrichtung wird bei einer Ausführung erreicht, bei der wenigstens einer der Schlitze als T-Nut ausgebildet ist, wobei der Grundkörper einen Nutboden hinter dem Schlitz ausbildet. Entsprechend sind die den Schlitz bildenden Rippen stabil gelagert. Bei geringem Gewicht der Gepäckhaltevorrichtung lassen sich so schwere Gepäckstücke anbringen. Vorzugsweise ist deshalb jeder der Schlitze als T-Nut ausgebildet, wobei der Grundkörper jeweils einen Nutboden hinter den Schlitzen ausbildet. Ein Nutboden kann auch aus einzelnen Streben ausgebildet sein, welche die beiden Seiten des Schlitzes miteinander verbinden.

Weiterhin besteht eine Ausgestaltungsoption dahingehend, dass das Verriegelungselement auf der vom ersten Schlitz abgewendeten Seite mit einer Abdeckung abgedeckt ist, an der das Verriegelungselement bevorzugt gleitgelagert ist. Mit der Abdeckung wird verhindert, dass die Drehbarkeit des Verriegelungselements ungewollt, bspw. durch eine Stoffwölbung des Gepäckstücks, blockiert wird. Außerdem kann die Abdeckung ein Gleitlager ausbilden, sodass auch ein Flachkörper gut stabilisiert wird und bei Belastung nicht über den Pilzkopf oder den Fortsatz des Aufnahmepilzes springt. Der erste Aufnahmepilz ragt hierfür bevorzugt zumindest annähernd bis an das Abdeckelement heran.

Ferner sieht eine Ausführungsform der Gepäckhaltevorrichtung vor, dass das Verriegelungselement, in einem zwischen dem Verriegelungsabschnitt und der Drehachse liegenden Bereich, einen Befestigungspunkt für ein Zugmittel aufweist. Das Zugmittel ist bevorzugt durch einen Durchbruch des Grundkörpers hindurchgeführt. Hierbei ist das Zugmittel bevorzugt in einer im Wesentlichen geodätisch vertikalen Ausrichtung angeordnet. Diese weist vorzugsweise nach oben. Das Zugmittel ist bevorzugt als Zugseil ausgebildet. In einer besonders bevorzugten Ausgestaltung des Zugmittels ist dies als Zugstange ausgebildet. Durch das Vorsehen eines Zugmittels wird vorzugsweise ermöglicht, dass die Entriegelung des Verriegelungselements einen einfachen Zug an dem Zugmittel erreichbar ist. Auf einen Betätigungsabschnitt am Verriegelungselement kann hierbei optional verzichtet werden.

Optional kann die Gepäckhaltevorrichtung dadurch ergänzt sein, dass das Verriegelungselement durch ein Sperrelement hinsichtlich einer Rotation um die Drehachse blockierbar ist. Durch das Blockieren der Rotation des Verriegelungselements ist die Verriegelungsstellung fixiert. Auf diese Weise wird ein Lösen der Verbindung zwischen dem ersten Aufnahmepilz und dem Grundkörper wirksam verhindert.

Bevorzugt weist das Sperrelement einen Bolzen auf, der entlang einer zu der Drehachse parallelen Richtung bewegbar ist. Besonders bevorzugt ist dieser Bolzen in einer Hülse gelagert. Durch die Translation des Bolzens entlang der zu der Drehachse parallelen Richtung lässt sich auf besonders einfach handzuhabende Weise das Verriegelungselement blockieren und die Blockierung des Verriegelungselements wieder lösen. In einer weiteren Ausgestaltung ist der Bolzen hierzu federbelastet in der Hülse gelagert, wobei in einer bevorzugten Ausgestaltung der vom Bolzen zurücklegbare Weg in Richtung von dem Verriegelungselement weg, so bemessen ist, dass der Bolzen das Verriegelungselement für die Rotation um die Drehachse komplett freigibt. In einer besonders bevorzugten Ausführungsform ragt der Bolzen in einer blockierenden Position zumindest so weit in Richtung des Verriegelungselements, dass der Bolzen eine orthogonal zu der Drehachse stehende und auf der der Abdeckung des Gehäuses zugewandten Seite liegende Fläche zumindest teilweise übersteigt.

In einer speziellen Ausführungsform der Gepäckhaltevorrichtung weist das Sperrelement einen Riegel auf, der um eine zu der Drehachse parallelen Achse rotierbar ist. Durch die Rotation des Riegels ist das Verriegelungselement blockierbar. Hierfür weist der Riegel bevorzugt eine Abkantung auf, die das Verriegelungselement blockiert. Besonders bevorzugt ist der Riegel in einer entriegelnden Position so um die zu der Drehachse parallelen Achse rotiert, dass das Verriegelungselement frei um die Drehachse rotierbar ist. Der Riegel kann in einer weiteren Ausgestaltung an eine Schließvorrichtung montiert sein, sodass die Betätigung der Schließvorrichtung die Rotation des Riegels freigibt und/oder der Riegel durch die Betätigung der Schließvorrichtung rotiert wird. Das Vorsehen eines rotierbaren Riegels als Sperrelement hat den Vorteil, dass das Blockieren durch eine einfache Rotation des Riegels vorzunehmen ist. Weiterhin ist von Vorteil, dass durch das Vorsehen einer Schließvorrichtung die Sicherheit der Gepäckhaltevorrichtung nicht nur gegen unbeabsichtigtes Verlieren des Gepäckstücks, sondern beispielsweise auch gegen Diebstahl des Gepäckstückes sicherbar ist.

Eine optionale Ergänzung der Gepäckhaltevorrichtung kann in einem Sperrelement bestehen, dass ein Betätigungsmittel aufweist, das zumindest teilweise außerhalb des Grundkörpers angeordnet ist. Hierdurch wird die Betätigung des Betätigungsmittels erleichtert. Das Betätigungsmittel kann hierbei in einer Ausgestaltung in Richtung des Verriegelungselements ausgerichtet sein. In einer anderen Ausgestaltung kann das Betätigungsmittel in eine dem Verriegelungselement entgegengesetzte Richtung ausgerichtet sein. Hierdurch lässt sich der Verriegelungsmechanismus einerseits, zur leichten Bedienung, außerhalb des Gepäckstücks anordnen und andererseits, zur Erhöhung der Sicherheit, innerhalb des Gepäckstücks.

Weiterhin besteht eine Ausgestaltungsoption dahingehend, dass die Gepäckhaltevorrichtung wenigstens einen zweiten Aufnahmepilz mit einer Pilzachse zur permanenten Festlegung an einem Motorrad aufweist, wobei jede der Pilzachsen parallel zur Pilzachse des ersten Aufnahmepilzes ausgerichtet ist, und wobei jeder weitere Aufnahmepilz in einen Schlitz eines separierten Haltekörpers einschiebbar ist. Dadurch, dass für den wenigstens einen zweiten Aufnahmepilz jeweils ein separierter Haltekörper vorgesehen ist, lassen sich besonders vorteilhafterweise die Haltekörper, einschließlich des Grundkörpers, und die Aufnahmepilze derart frei an dem Gepäckstück und dem Motorrad positionieren, dass einerseits eine optimale Position an dem Motorrad und eine optimale Position an dem Gepäckstück gefunden werden kann, wobei mindestens einer der zweiten Aufnahmepilze mit dem separierten Haltekörper und der erste Haltepilz mit dem Grundkörper in Eingriff bringbar ist.

Die Erfindung betrifft außerdem ein Motorrad mit einer Gepäckhaltevorrichtung in einer der vorstehenden Ausgestaltungsvarianten, wobei der erste Aufnahmepilz permanent am Motorrad festgelegt ist, und wobei der Grundkörper permanent an einem Gepäckstück festgelegt ist. Mit Hilfe der Gepäckhaltevorrichtung lässt sich das Gepäckstück schnell und einfach am Motorrad festlegen, wobei mit dem Verriegelungselement eine sichere und feste Verbindung geschaffen wird.

In einer bevorzugten Ausgestaltung sind die Pilzachse und die Drehachse geodätisch horizontal ausgerichtet. Dies trifft insbesondere bei am Motorrad montiertem Gepäckstück und aufrechter Fahrlage zu. Mit anderen Worten sollten die Pilzachse und die Drehachse parallel zu den Radachsen ausgerichtet sein.

Bei einer bevorzugten Ausgestaltung weist das erste Ende mit seiner Öffnung geodätisch nach unten. Damit ist das Gepäckstück komfortabel am Motorrad anbringbar und kann durch hochheben vom Motorrad abgehoben werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Explosionsansicht einer Gepäckhaltevorrichtung mit einem Gepäckstück;
- Fig. 2: eine Explosionsansicht eines Grundkörpers mit einem Verriegelungselement, einer Feder und einer Abdeckung;
- Fig. 3: eine Frontalansicht eines Grundkörpers mit einem Verriegelungselement;
- Fig. 4: eine Detailansicht des Bereichs um das Verriegelungselement gemäß Fig. 3;
- Fig. 5: einen Schnitt durch den Bereich des Verriegelungselements;
- Fig. 6: eine perspektivische Ansicht einer Ausgestaltung des Grundkörpers nach den Figuren 1 bis 5, wobei eine Außenfläche des Grundkörpers zur Veranschaulichung des in dem Grundkörper liegenden Verriegelungselements transparent dargestellt ist;
- Fig. 7: eine Frontalansicht einer Ausgestaltung des Grundkörpers nach Figur 6 mit nur einem Schlitz und dem Verriegelungselement;
- Fig. 8: eine perspektivische Darstellung des Grundkörpers nach Figur 7, mit einem Bolzen als Sperrelement, wobei der Grundkörper ohne Gehäuse dargestellt ist;
- Fig. 9: eine perspektivische Darstellung des Grundkörpers nach Figur 7, mit einem Riegel als Sperrelement, wobei der Grundkörper ohne Gehäuse dargestellt ist; und
- Fig. 10: eine perspektivische Darstellung eines separierten Haltekörpers.

Im Folgenden werden identische oder einander ähnliche Elemente mit den gleichen Bezugszeichen gekennzeichnet.

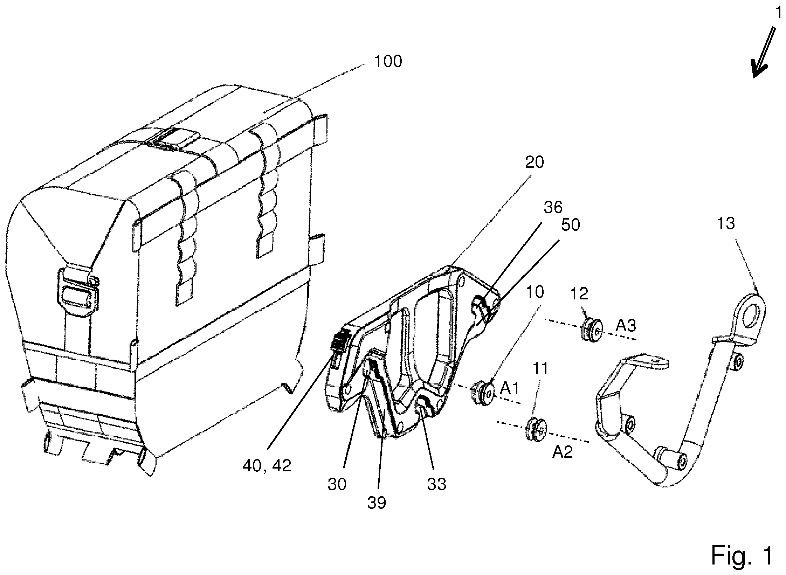

In **Fig. 1** ist in einer Explosionsansicht Gepäckstück 100 sowie eine Gepäckhaltevorrichtung 1 mit einem Grundkörper 20, drei Aufnahmepilzen 10, 11, 12 und einem Trägerrahmen 13 gezeigt. Der Grundkörper 20 wird mit Werkzeug und Befestigungsmitteln wie Schrauben oder alternativ bzw. ergänzend mit Klebstoff permanent mit dem Gepäckstück 100 verbunden. Hierfür kann innerhalb des Gepäckstücks eine Gegenplatte vorgesehen werden, sodass die Gepäckstückwandung zwischen der Gegenplatte und dem Grundkörper 20 eingeklemmt wird.

Vorliegend ist die zum Gepäckstück 100, nämlich einem Seitenkoffer, weisende Seite des Grundkörpers 20 eben ausgebildet. Hierdurch lässt er sich einfach auf Gepäckstücke mit flacher Seitenwand aufsetzen und hier befestigen.

Im Grundkörper sind auf der Seite, die in Richtung der Aufnahmepilze 10, 11, 12 weist drei Schlitze 30, 33, 36 ausgebildet. Der erste dieser Schlitze 30 weist ein Führungselement 39 auf, entlang dessen der erste Aufnahmepilz 10 zur offenen Seite des ersten Schlitzes 30 gleiten kann. Hinter dem dritten Schlitz 36 erkennt man einen Nutboden 50.

Außerdem erkennt man einen Betätigungsabschnitt 42 eines Verriegelungselements 40, der über den Grundkörper 20 hinaussteht.

Die Aufnahmepilze werden mit Werkzeug oder materialschlüssig permanent mit dem Trägerrahmen 13 verbunden, der wiederum an einem Motorrad festlegbar ist, insbesondere mit Schrauben. Der Trägerrahmen 13 kann individuell an die verfügbaren Befestigungsstellen eines Motorrads angepasst sein. Man erkennt, dass die Pilzachsen A1, A2, A3 der Aufnahmepilze 10, 11, 12 parallel zueinander ausgerichtet sind. Bei Montage an einem Motorrad sind sie auch im Wesentlichen parallel zur Hinterachse des Hinterrads.

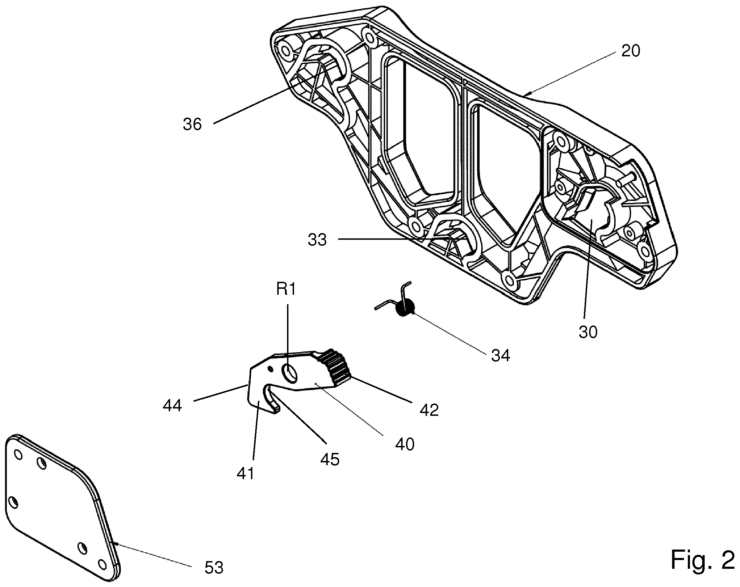

**Fig. 2** zeigt eine Explosionsansicht eines Grundkörpers 20 mit einem Verriegelungselement 40, einer Feder 34 und einer Abdeckung 53. Insbesondere sieht man hier die Rückseite des Grundkörpers 20 gemäß Fig. 1. Wie man erkennt, ist hier eine Vielzahl an Versteifungsrippen angeordnet, welche die gegenüberliegende, sichtseitige Außenhaut stützen und das Bauteil versteifen.

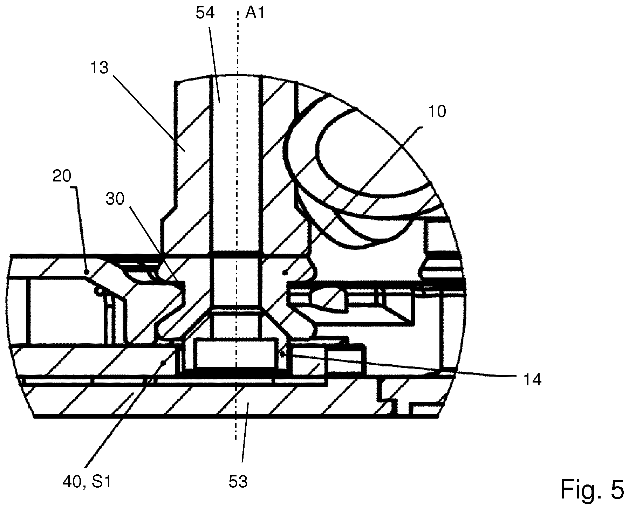

Das Verriegelungselement 40 verfügt über einen Verriegelungsabschnitt 41 mit einer Vertiefung 45 zum Umgreifen des ersten Aufnahmepilzes (sieh Fig. 1 und 5). Außerdem verfügt das Verriegelungselement 40 über einen Betätigungsabschnitt 42, mit dem das Verriegelungselement 40 um eine Drehachse R1 rotierbar ist. Man erkennt, dass das Verriegelungselement 40 einteilig bzw. monolithisch ausgebildet ist.

Wenn die Bauteile zusammengeschoben sind, ist das Verriegelungselement 40 drehbar um die Drehachse R1 an dem Grundkörper 20 gelagert und wird mit der Feder 34 mit einem Drehmoment in einer Verriegelungsposition gehalten. Mit der plattenförmigen Abdeckung 53 wird das Verriegelungselement 40 auf der Rückseite des Grundkörpers 20 abgedeckt und gleitgelagert.

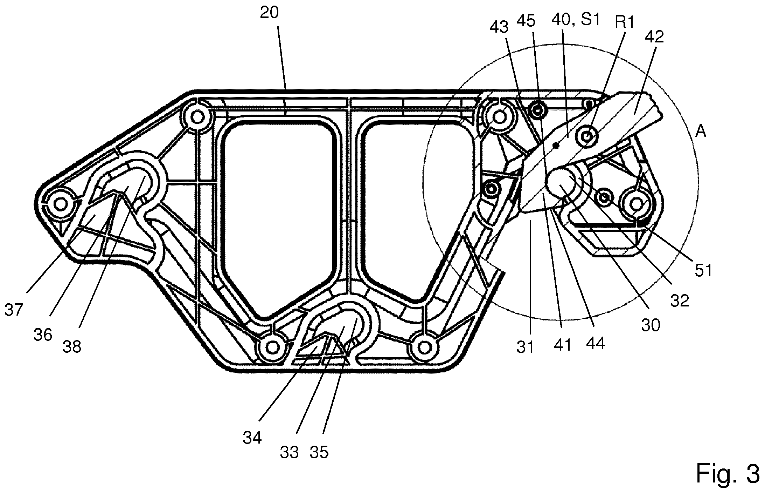

Fig. 3 zeigt eine Frontalansicht eines Grundkörpers 20 mit einem Verriegelungselement 40 wie sie in Fig. 2 gezeigt sind, jedoch in montierter Position und ohne Abdeckung 53. Zunächst ist hier der Aufbau des Grundkörpers 20 gut zu erkennen. Der Grundkörper 20 bildet einen ersten Schlitz 30 mit beidseitigem Hinterschnitt 51 aus, wobei das erste Ende 31 des ersten Schlitzes 30 offen und das zweite Ende 32 geschlossen ausgebildet ist. Das erste Ende 31 des ersten Schlitzes 30 ist in einer Montageausrichtung (siehe Fig.1) im Wesentlichen geodätisch nach unten geöffnet und das zweite Ende 32 ist geodätisch schräg nach oben ausgerichtet.

Für einen zweiten und dritten Aufnahmepilz (siehe Bezugszeichen 11, 12 in Fig. 1) sind ein zweiter und ein dritter Schlitz 33, 36 im Grundkörper 20 ausgebildet, deren erste Enden 34, 37 ebenfalls offen ausgebildet sind. Die ersten Enden 31, 34, 37 der Schlitze 30, 33, 36 sind insbesondere im gleichen Muster angeordnet wie die Aufnahmepilze (siehe Fig. 1). Dabei haben die ersten Enden 34, 37 des zweiten und dritten Schlitzes 33, 36 die gleiche Ausrichtung wie das erste Ende 31 des ersten Schlitzes 30. Die zweiten und dritten Schlitze 33, 36 haben jeweils ein geschlossenes zweites Ende 35, 38, wobei die zweiten Enden 32, 35, 38 der drei Schlitze 30, 33, 36 im gleichen Muster angeordnet sind wie die Aufnahmepilze (siehe Fig. 1). Man erkennt, dass der erste und die weiteren Schlitze 30, 33, 36 jeweils einen gleichartigen und gleichausgerichteten Kulissenverlauf für den ersten und die weiteren Aufnahmepilze (siehe Fig. 1) ausbilden.

Die Aufnahmepilze (siehe Fig. 1) sind jeweils quer zu ihrer Pilzachse A1, A2, A3 formschlüssig vom ersten Ende 31,34, 37 bis zum zweiten Ende 32, 35, 38 in die drei Schlitze 30, 33, 36 einschiebbar und hintergreifen dann einen Hinterschnitt 51 der Schlitze 30, 33, 36. Hierzu sind die Schlitze 30, 33, 36 jeweils als T-Nut ausgebildet.

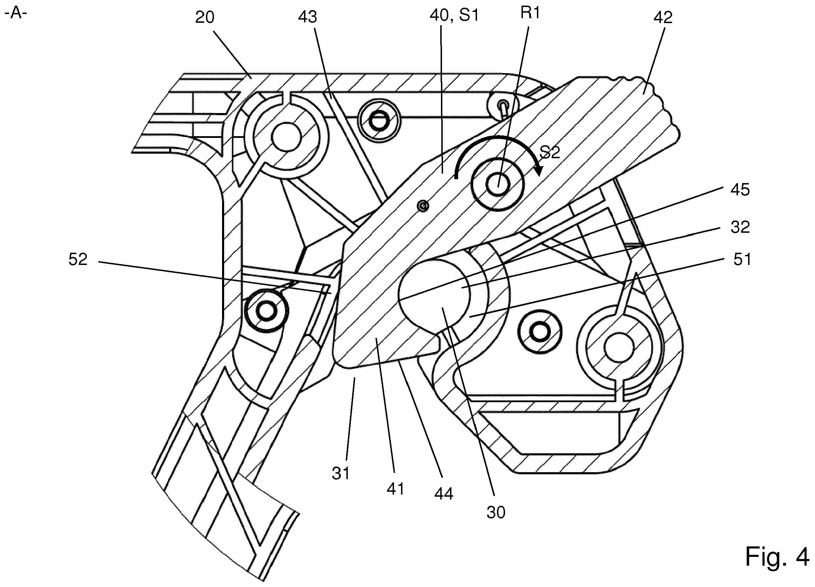

In dem Bildausschnitt A sind liegen die in der Detailansicht der Fig. 4 besser zu erkennenden Bauteile. Die Beschreibung zu Fig. 4 trifft insofern auch auf die Bezugszeichen in Fig. 3 zu.

Der Bildausschnitt A nach **Fig. 4** zeigt den Bereich des Grundkörpers 20 um das Verriegelungselement 40, wie es schon in Fig. 2 beschrieben wurde. Man sieht, wie das Verriegelungselement 40 um die Drehachse R1 drehbar an dem Grundkörper 20 gelagert ist. Wenn ein Aufnahmepilz in den ersten Schlitz 30 eingeführt wird, ist dessen Pilzachse A1 im Wesentlichen parallel zu dieser Drehachse R1.

Mit einem Verriegelungsabschnitt 41 ist das Verriegelungselement 40 in der gezeigten Verriegelungsstellung S1 mit einem ersten Aufnahmepilz (sieh Fig.1 und 5) in Eingriff bringbar und der erste Aufnahmepilz so am zweiten Ende 32 des Schlitzes 30 arretierbar. Wie man sieht, ist eine Vertiefung 45 im Verriegelungsabschnitt 41 in der Verriegelungsstellung S1 entlang des ersten Schlitzes 30 sowie in deren Zentrum am tiefsten ausgestaltet. Mit der Vertiefung 45 ist der erste Aufnahmepilz der gezeigten Verriegelungsstellung gemeinsam mit dem zweiten Ende 32 des ersten Schlitzes 30 formschlüssig umgreifbar.

Eine Feder 43 hält das Verriegelungselement in der gezeigten Verriegelungsstellung S1. Durch Betätigung eines Betätigungsabschnitts 42, der in der Normalenebene zur Drehachse R1 aus dem Grundkörper 20 heraussteht, kann das Verriegelungselement 40 um die Drehachse R1 in eine Freigabestellung S2 gedreht werden.

Das Verriegelungselement 40 verfügt zudem über eine Entriegelungsrampe 44, welche den ersten Schlitz 30 in der Verriegelungsstellung S1 in Richtung des ersten Endes 31 derart überspannt, dass das Verriegelungselement 40 durch ein Einschieben des ersten Aufnahmepilzes 10 in den ersten Schlitz 30 von der Verriegelungsstellung S1 um die Drehachse R1 in die Freigabestellung S2 drehbar ist.

Damit das Verriegelungselement 40 eng um den Aufnahmepilz schwenkbar und im Fahrbetrieb im Wesentlichen zugbelastet ist, ist die Drehachse R1 so zum zweiten Ende 31 des ersten Schlitzes 30 angeordnet, dass der erste Aufnahmepilz 10 in der Verriegelungsstellung S1 zwischen dem Verriegelungsabschnitt 41 und der Drehachse R1 liegt.

Das Verriegelungselement 40 ist im Bereich des Verriegelungsabschnitts 41 als Flachkörper in der Normalenebene zur Drehachse R1 ausgebildet. Um nicht zu verbiegen, ist es auf Rippen und Wandungen des Grundkörpers 20 gleitgelagert. Gegenüberliegend kann eine Gleitlagerung durch eine Abdeckung (siehe Fig. 1 und 5) ausgebildet sein.

Wie man in Fig. 2 erkennt, sind dem zweiten und dritten Schlitz 33, 36 keine Verriegelungselemente, insbesondere entsprechend der Fig. 4, zugeordnet.

In **Fig. 5** ist ein Schnitt durch den Bereich des Verriegelungselements 40 gemäß Fig. 4 dargestellt, wobei jedoch ein erster Aufnahmepilz 10 mit dargestellt ist. Hier erkennt man zunächst, wie der Grundkörper 20 mit dem Schlitz 30 hinter den Pilzkopf des Aufnahmepilzes 10 eingreift.

Der erste Aufnahmepilz 10 ist zweiteilig mit einem zylindrischen Fortsatz 14 am freien Ende ausgebildet. Mit einer einzelnen Schraube 54 sind der Fortsatz 14 und der erste Aufnahmepilz 10 am Trägerrahmen 13 festgelegt.

Wie man sieht, liegt das Verriegelungselement 40 in einer Ebene benachbart zum ersten Schlitz 30 und ist in dieser Ebene um die außerhalb des Bildausschnitts liegende Drehachse drehbar. Der zapfenartige Fortsatz 14 am ersten Aufnahmepilz 10 ragt bis in die Ebene des Verriegelungselements 40. In der gezeigten Verriegelungsstellung S1, arretiert das Verriegelungselement 40 den ersten Aufnahmepilz 10 am zweiten Ende des ersten Schlitzes 30.

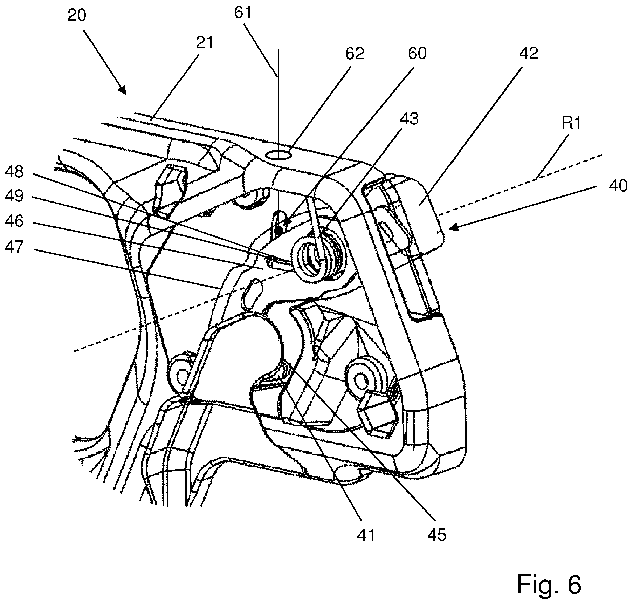

In **Fig. 6** ist ein Ausschnitt einer Ausführungsform des Grundkörpers 20 perspektivisch dargestellt. Der Grundkörper 20 ist hierbei mit einer transparenten Fläche des Gehäuses 21 des Grundkörpers dargestellt, sodass das in dem Grundkörper 20 liegende Verriegelungselement 40 sichtbar ist. Das Verriegelungselement 40 ist ebenfalls transparent dargestellt, sodass ein Kern 46 des Verriegelungselements 40 sichtbar ist.

Das Verriegelungselement 40 weist einen Kern 46 auf, der zumindest teilweise innerhalb eines äußeren Mantels 47 des Verriegelungselements 40 angeordnet ist. Der Kern 46 des Verriegelungselements 40 besteht bevorzugt aus einem mechanisch widerstandsfähigerem Material als der äußere Mantel 47 des Verriegelungselements 40. Der Kern 46 besteht beispielsweise aus einem Metall, während der äußere Mantel aus einem Kunststoff besteht. Hierbei kann der äußere Mantel 47 und an den Kern 40 angespritzt sein.

Der Kern 46 kann teilweise den äußeren Mantel 47 durchragen und bündig mit dem äußeren Mantel 47 abschließen. Hierbei bildet der Kern 46 einen Bereich der Außenfläche des Verriegelungselements 40, der mechanisch belastbar ist. Bevorzugt durchragt der Kern 46 den äußeren Mantel 47 des Verriegelungselements 40 in den Bereichen bündig, in denen die Entriegelungsrampe 44 (in Fig. 6 nicht dargestellt) und/oder die Vertiefung 45 angeordnet sind.

Das Verriegelungselement 40 ist um die Drehachse R1 rotierbar. Konzentrisch zu der Drehachse R1 ist eine Feder 43 angeordnet, die als Torsionsfeder ausgebildet sein kann.

Die Feder 43 liegt abschnittsweise in einer Einbuchtung 48 des Verriegelungselements 40 und weist ein umgebogenes Ende auf, das im Wesentlichen parallel zu der Drehachse R1 ausgerichtet ist. Das umgebogene Ende der Feder 43 liegt hierbei in einer Bohrung 49 des Verriegelungselements 40, die in dem Kern 46 und/oder dem äußeren Mantel 47 ausgebildet ist.

An dem Verriegelungselement 40 befindet sich auf einer dem Betätigungsabschnitt 42 des Verriegelungselements 40 abgewandten Seite der Drehachse R1, zwischen der Drehachse R1 und dem Verriegelungsabschnitt 41 liegend, ein Befestigungspunkt 60.

Der Befestigungspunkt 60 kann in dem Flachkörper des Verriegelungselements 40 beispielsweise als Bohrung angeordnet sein. Alternativ kann der Befestigungspunkt 60 an der Oberfläche des Verriegelungselements 40 angeordnet sein und ein Befestigungsmittel, beispielsweise eine Öse aufweisen.

An dem Befestigungspunkt 60 ist ein Zugmittel 61 befestigt. Das Zugmittel 61 kann beispielsweise ein Seil aus einer oder mehreren synthetischen Fasern, aus Metall oder anderen zu seilartig verarbeitbaren Materialien bestehen. Alternativ kann das Zugmittel 61 auch als Zugstange ausgebildet sein. Das Zugmittel 61 ragt durch einen Durchbruch 62, der in dem Gehäuse 21 des Grundkörpers 20 ausgebildet ist.

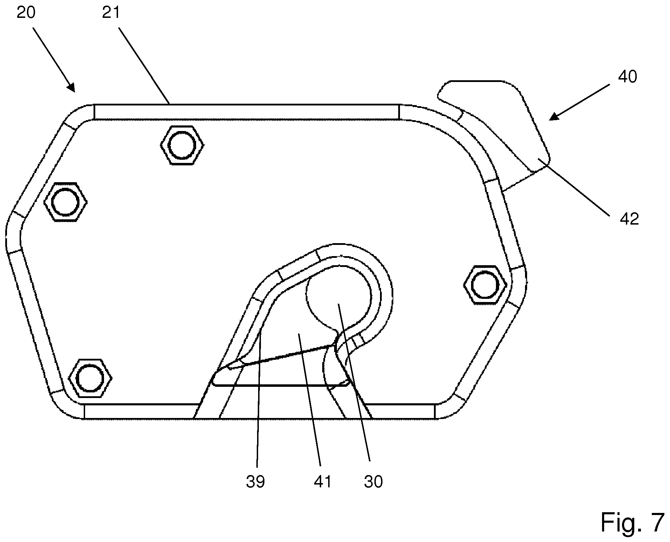

**Fig. 7** ist eine Frontalansicht einer Ausführungsform des Grundkörpers 20 nach Figur 6 mit einem Schlitz 30 und dem Verriegelungselement 40. Hierbei ist der Grundkörper 20 an die Außenseite eines Gepäckstücks 100 montierbar und mit dem Aufnahmepilz 10 der an einem Motorrad montiert ist, in Eingriff bringbar.

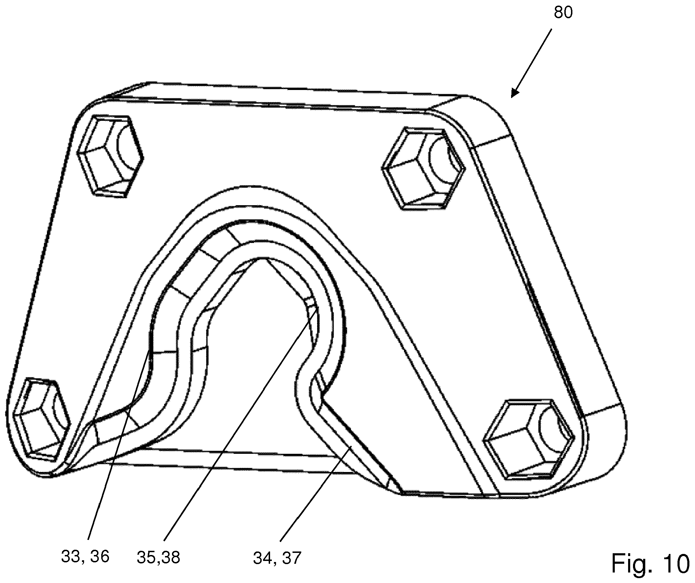

Zur sicheren Befestigung des Gepäckstücks 100 kann mindestens ein weiterer Aufnahmepilz 11, 12 mit mindestens einem separierten Haltekörper 80 nach Fig. 10, der ebenfalls an dem Gepäckstück 100 montiert wird, in Eingriff gebracht werden.

Durch das Vorsehen eines von dem mindestens einen Haltekörpern 80 getrennten Grundkörper 20 bestehen hinsichtlich der Montagepositionen der Haltekörper 80, des Grundkörpers 20 an dem Gepäckstück 100 und den Aufnahmepilzen 10, 11, 12 an dem Motorrad mehr Montagemöglichkeiten.

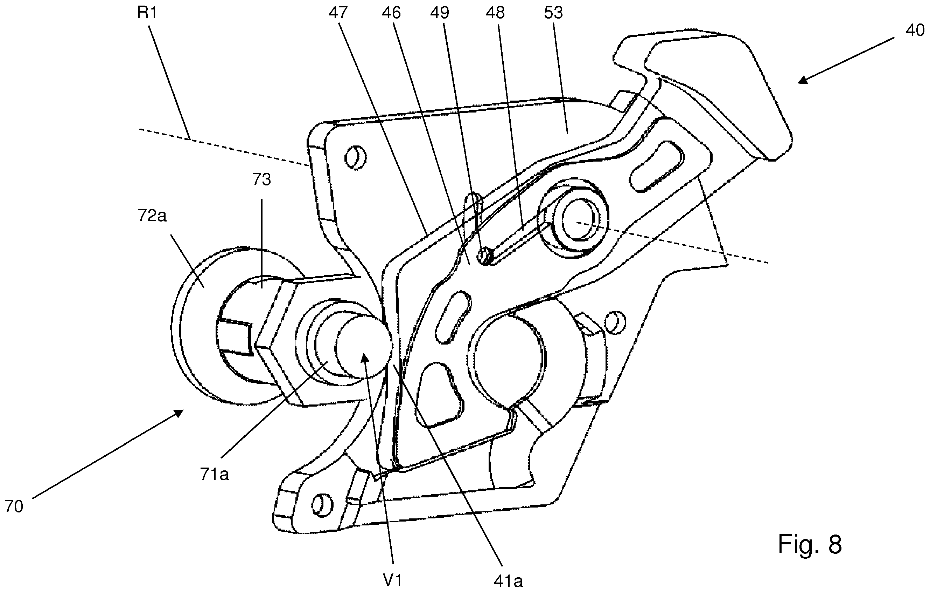

**Fig. 8** zeigt eine perspektivische Darstellung des Grundkörpers 20 nach Figur 7 mit einem Bolzen 71a als Sperrelement 70, wobei der Grundkörper 20 ohne Gehäuse 21 dargestellt ist.

Das Sperrelement 70 ist in den Wirkbereich des Verriegelungselements 40 bringbar, wodurch das Sperrelement 70 in einer gesperrten Stellung V1 ist, wobei das Sperrelement 70 insbesondere das Verriegelungselement 40 an einem Sperrabschnitt 41a des Verriegelungselements 40 sperrt. Das Sperrelement befindet sich in dieser gesperrten Stellung V1 im Wirkbereich des Verriegelungselements. In einer entsperrten Stellung V2 (nicht dargestellt) befindet sich das Sperrelement 70 außerhalb des Wirkbereichs des Verriegelungselements 40.

Das Sperrelement 70 weist ein Betätigungsmittel 72 auf, welches auf einer dem Verriegelungselement 40 zugewandten Seite, also der Seite der Gepäckhaltevorrichtung 1, die dem Motorrad zugewandt ist, angeordnet sein kann. Auf diese Weise ist das Betätigungsmittel 72 leicht außerhalb des Gepäckstücks 100 betätigbar und das Gepäckstück 100 ist aus der Gepäckhaltevorrichtung 1 leicht entnehmbar.

Das Betätigungsmittel 72 kann alternativ auf einer dem Verriegelungselement 40 abgewandten Seite, also der Seite der Gepäckhaltevorrichtung 1, die dem Gepäckstück 100 zugewandt ist, angeordnet sein. Auf diese Weise ist das Betätigungsmittel 1 in das Gepäckstück 100 integrierbar. Dies erhöht die Sicherheit der Gepäckhaltevorrichtung 1 gegenüber einem unbefugten Lösen.

Als Sperrelement 70 ist der Bolzen 71a vorgesehen. Der Bolzen 71a ist in einer Hülse 73, die an der Abdeckung 53 angeordnet ist, derart gelagert, dass der Bolzen 71a eine translatorische Bewegung parallel zu der Drehachse R1 ausführen kann. Der Bolzen 71a weist auf einer dem Verriegelungselement 40 abgewandten Seite einen Knauf 72a als Betätigungsmittel 72 auf.

Der Bolzen 71a ist in der Hülse 73 federbelastet angeordnet, sodass eine Federkraft den Bolzen 71a in den Wirkbereich des Verriegelungselements 40 drückt. Sofern sich das Verriegelungselement 40 in der Verriegelungsstellung S1 befindet, ist der Bolzen 71a in einer gesperrten Stellung V1, die die Rotation des Verriegelungselements 40 um die Drehachse D1 verhindert.

Sofern sich das Verriegelungselement 40 in einer Freigabestellung S2 befindet, ist der Bolzen 71a in einer entsperrten Stellung V2 (nicht dargestellt), die die Rotation des Verriegelungselements 40 ermöglicht. Hierbei kann der Bolzen 71a mittels der Federkraft an das Verriegelungselement 40 angelegt sein.

Außerdem kann die Hülse 73 einen Rastmechanismus vorsehen, der den Bolzen 71a in der Position hält, die die Freigabestellung S2 des Verriegelungselements 40 ermöglicht. Die Rastung kann durch Drehen des Knaufs 72a aufgehoben werden.

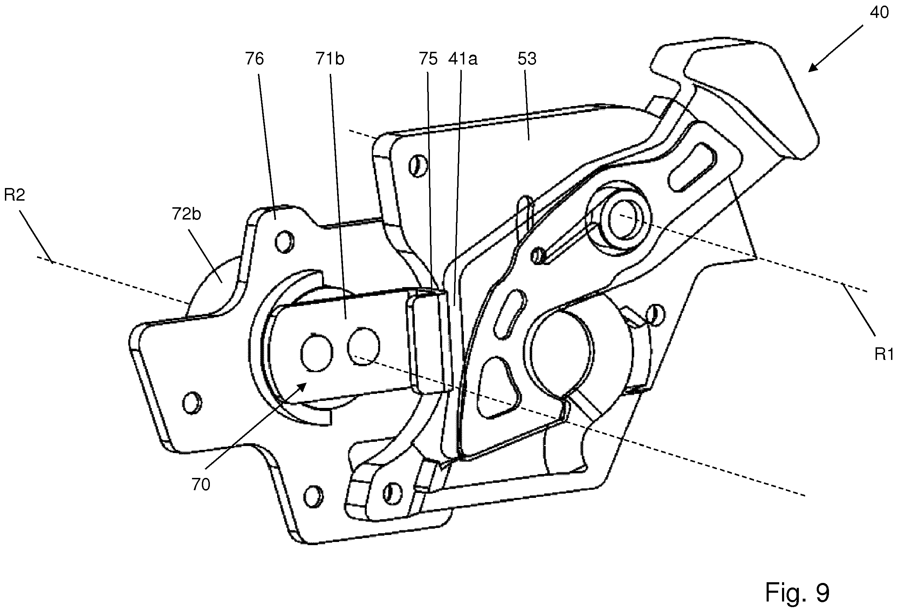

**Fig. 9** zeigt eine perspektivische Darstellung des Grundkörpers 20 nach Figur 7, mit einem Verriegelungselement 40 und mit einem Riegel 71b als Sperrelement 70, wobei der Grundkörper 20 ohne Gehäuse 21 dargestellt ist.

Der Riegel 71b ist parallel zu dem Verriegelungselement 40 angeordnet und weist eine Abkantung 75 auf, die in einer gesperrten Stellung V1 zu einem Sperrabschnitt 41a des Verriegelungselements 40 im Wesentlichen parallel angeordnet ist.

Der Riegel 71b ist an eine Schließvorrichtung 72b montiert, wobei die Schließvorrichtung 72b an einer Montageplatte 76 angebracht ist, die an das Gehäuse 21 (in Fig. 8 nicht dargestellt) montierbar ist.

Die Schließvorrichtung 72b ist im Wesentlichen zylindrisch ausgebildet, wobei durch die Schließvorrichtung 72b konzentrisch eine zu der Drehachse R1 parallelen Achse R2 angeordnet ist.

Die Schließvorrichtung 72b kann einen Schließzylinder aufweisen, der in einer aufgeschlossenen Position, den an die Schließvorrichtung 72b angebrachten Riegel, insbesondere die Abkantung 75 des Riegels 71b außerhalb des Wirkbereichs des Verriegelungselements 40 rotiert. Alternativ ist durch den Schließzylinder die Schließvorrichtung 72b aufschließbar, wodurch die Schließvorrichtung 72b und somit auch der Riegel 71b um die parallele Achse R1 rotierbar wird.

Der Riegel 71b lässt sich durch die Rotation um die parallele Achse R2, insbesondere mit der Abkantung 75, einmal in den Wirkbereich des Verriegelungselements 40 rotieren, wodurch das Verriegelungselement 40 in seiner Rotation um die Drehachse D1 gesperrt ist. Der Riegel 71b lässt sich durch die Rotation um die parallele Achse R2, insbesondere mit der Abkantung 75, zudem außerhalb des Wirkbereichs des Verriegelungselements 40 rotieren, wodurch das Verriegelungselement 40 in seiner Rotation um die Drehachse D1 freigegeben ist.

**Fig. 10** zeigt eine perspektivische Darstellung eines separierten Haltekörpers 80. Der separierte Haltekörper 80 ist eine Weiterbildung des Grundkörpers 20 zur Aufnahme eines der zweiten oder dritten Aufnahmepilze 11, 12. Der separierte Haltekörper 80 wird hierbei zusätzlich zu dem Grundkörper 20 nach Fig. 7 an dem Gepäckstück angebracht.

Die Erfindung ist nicht auf eine der vorbeschriebenen Ausführungsformen beschränkt, sondern in vielfältiger Weise abwandelbar.

Beispielsweise können die Aufnahmepilze 10, 11, 12 an dem Gepäckstück 100 und der Grundkörper 20 sowie der Haltekörper 80 an dem Motorrad montiert sein.

Darüber hinaus kann das Sperrelement 70 auf andere denkbare Arten mit dem Verriegelungselement in Eingriff kommen. Beispielsweise kann ein als Bolzen 71a ausgebildetes Sperrelement 70 mit einer in dem Verriegelungselement 40 vorhandenen Bohrung in Eingriff gebracht werden. Für den Fall, dass das Sperrelement 70 als Riegel 71b ausgebildet ist, kann der Riegel 71a mit einem entsprechenden Schlitz in dem Verriegelungselement 40 in Eingriff gebracht werden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Gepäckhaltevorrichtung | | |
| | | 50 | Nutboden |
| 10 | erster Aufnahmepilz | 51 | Hinterschnitt |
| 11 | zweiter Aufnahmepilz | 52 | Ausnehmung |
| 12 | dritter Aufnahmepilz | 53 | Abdeckung |
| 13 | Trägerrahmen | 54 | Schraube |
| 14 | Fortsatz | | |
| | | 60 | Befestigungspunkt |
| 20 | Grundkörper | 61 | Zugmittel |
| 21 | Gehäuse | 62 | Durchbruch |
| | | | |
| 30 | erster Schlitz | 70 | Sperrelement |
| 31 | erstes Ende (erster Schlitz) | 71a | Bolzen |
| 32 | zweites Ende (erster Schlitz) | 71b | Riegel |
| 33 | zweiter Schlitz (zweiter Aufnahmepilz) | 72 | Betätigungsmittel |
| 34 | erstes Ende (zweiter Aufnahmepilz) | 72a | Knauf |
| 35 | zweites Ende (zweiter Aufnahmepilz) | 72b | Schließvorrichtung |
| 36 | dritter Schlitz (dritter Aufnahmepilz) | 73 | Hülse |
| 37 | erstes Ende (dritter Aufnahmepilz) | 75 | Abkantung |
| 38 | zweites Ende (dritter Aufnahmepilz) | 76 | Montageplatte |
| 39 | Führungselement | 80 | separierter Haltekörper |
| | | | |
| 40 | Verriegelungselement | 100 | Gepäckstück |
| 41 | Verriegelungsabschnitt | A1 | Pilzachse (erster Aufnahmepilz) |
| 41a | Sperrabschnitt | A2 | Pilzachse (zweiter Aufnahmepilz) |
| 42 | Betätigungsabschnitt | A3 | Pilzachse (dritter Aufnahmepilz) |
| 43 | Feder | S1 | Verriegelungsstellung |
| 44 | Entriegelungsrampe | S2 | Freigabestellung |
| 45 | Vertiefung | R1 | Drehachse |
| 46 | Kern | R2 | Parallele Achse |
| 47 | äußerer Mantel | V1 | gesperrte Stellung |
| 48 | Einbuchtung | V2 | entsperrte Stellung |
| 49 | Bohrung | | |

## Patentansprüche

1. Gepäckhaltevorrichtung (1) zum temporären Befestigen von Gepäckstücken (100), insbesondere von Koffern, Seitenkoffern oder Taschen, an einem Motorrad, mit
▪ einem ersten Aufnahmepilz (10) mit einer Pilzachse (A1) und zur permanenten Festlegung an einem Motorrad,
▪ einem Grundkörper (20) zur permanenten Festlegung an einem Gepäckstück (100),
- wobei der Grundkörper (20) einen ersten Schlitz (30) mit beidseitigem Hinterschnitt (51) ausbildet, wobei das erste Ende (31) des ersten Schlitzes (30) offen und das zweite Ende (32) geschlossen ausgebildet ist, und
- wobei der erste Aufnahmepilz (10) quer zu seiner Pilzachse (A1) formschlüssig vom ersten Ende (31) bis zum zweiten Ende (32) in den ersten Schlitz (30) einschiebbar ist,
▪ wobei die Gepäckhaltevorrichtung (1) ein Verriegelungselement (40) aufweist, das um eine Drehachse (R1), die parallel zur Pilzachse (A1) des ersten Aufnahmepilzes (10) ausgerichtet ist, drehbar am Grundkörper (20) gelagert ist, und das einen Verriegelungsabschnitt (41) aufweist, mit dem das Verriegelungselement (40) in einer Verriegelungsstellung (S1) mit dem ersten Aufnahmepilz (10) in Eingriff bringbar und der erste Aufnahmepilz (10) am zweiten Ende (32) des Schlitzes (30) arretierbar ist,
**dadurch gekennzeichnet, dass** der Verriegelungsabschnitt (41) eine Vertiefung (45) aufweist, mit welcher der erste Aufnahmepilz (10) in der Verriegelungsstellung (S1) gemeinsam mit dem zweiten Ende (32) des ersten Schlitzes (30) formschlüssig umgreifbar ist.

2. Gepäckhaltevorrichtung (1) nach einem der vorhergehenden Ansprüche, **dadurch gekennzeichnet, dass das** Verriegelungselement (40) einen Betätigungsabschnitt (42) aufweist, mit dem das Verriegelungselement (40) um die Drehachse (R1) von der Verriegelungsstellung (S1) in eine Freigabestellung (S2) drehbar ist.

3. Gepäckhaltevorrichtung (1) nach Anspruch 2, **dadurch gekennzeichnet, dass** der Betätigungsabschnitt (42) über den Grundkörper (20) hinaussteht, insbesondere in der Normalenebene zur Drehachse (R1).

4. Gepäckhaltevorrichtung (1) nach einem der vorhergehenden Ansprüche, **dadurch gekennzeichnet, dass** das Verriegelungselement (40) in der Ebene des ersten Schlitzes (30) um die Drehachse (R1) drehbar ist.

5. Gepäckhaltevorrichtung (1) nach einem der vorhergehenden Ansprüche, **dadurch gekennzeichnet, dass** der vom ersten Schlitz (30) ausgebildete Hinterschnitt (51) im Bereich des Verriegelungselements (40) eine Ausnehmung (52) aufweist, in der das Verriegelungselement (40) in der Verriegelungsstellung (S1) liegt und den Hinterschnitt (51) ergänzt.

6. Gepäckhaltevorrichtung (1) nach einem der Ansprüche 1 bis 3, **dadurch gekennzeichnet, dass** das Verriegelungselement (40) in einer Ebene benachbart zum ersten Schlitz (30) um die Drehachse (R1) drehbar ist, und der erste Aufnahmepilz (10) am freien Ende einen zapfenartigen Fortsatz (14) aufweist, der in die Ebene des Verriegelungselements (40) ragt.

7. Gepäckhaltevorrichtung (1) nach einem der vorhergehenden Ansprüche, **dadurch gekennzeichnet, dass** das Verriegelungselement (40) mit einer Feder (43) in Richtung der Verriegelungsstellung (S1) kraftbelastet ist.

8. Gepäckhaltevorrichtung (1) nach einem der vorhergehenden Ansprüche, **dadurch gekennzeichnet, dass** das Verriegelungselement (40) eine Entriegelungsrampe (44) aufweist, welche den ersten Schlitz (30) in der Verriegelungsstellung (S1) in Richtung des ersten Endes (31) derart überspannt, dass das Verriegelungselement (40) durch ein Einschieben des ersten Aufnahmepilzes (10) in den ersten Schlitz (30) von der Verriegelungsstellung (S1) um die Drehachse (R1) in die Freigabestellung (S2) drehbar ist.

9. Gepäckhaltevorrichtung (1) nach einem der vorhergehenden Ansprüche, **dadurch gekennzeichnet, dass** das Verriegelungselement (40), in einem zwischen dem Verriegelungsabschnitt (41) und der Drehachse (R1) liegenden Bereich, einen Befestigungspunkt (60) für ein Zugmittel (61) aufweist.

10. Gepäckhaltevorrichtung (1) nach einem der vorhergehenden Ansprüche, **dadurch gekennzeichnet, dass** das Verriegelungselement (40) durch ein Sperrelement (70) hinsichtlich einer Rotation um die Drehachse (R1) blockierbar ist.

11. Gepäckhaltevorrichtung (1) nach Anspruch 10, **dadurch gekennzeichnet, dass** das Sperrelement (70) einen Bolzen (71a) aufweist, der entlang einer der Drehachse (R1) parallelen Richtung bewegbar ist.

12. Gepäckhaltevorrichtung (1) nach Anspruch 10, **dadurch gekennzeichnet, dass** das Sperrelement (70) einen Riegel (71b) aufweist, der um eine zu der Drehachse (R1) parallelen Achse (R2) rotierbar ist.

13. Gepäckhaltevorrichtung (1) nach einem der Ansprüche 10 bis 12, **dadurch gekennzeichnet, dass** das Sperrelement (70) ein Betätigungsmittel (72) aufweist, das zumindest teilweise außerhalb des Grundkörpers (20) angeordnet ist.

14. Gepäckhaltevorrichtung (1) nach einem der vorhergehenden Ansprüche, **dadurch gekennzeichnet, dass** diese wenigstens einen zweiten Aufnahmepilz (11, 12) mit einer Pilzachse (A2, A3) zur permanenten Festlegung an einem Motorrad aufweist, wobei jede der Pilzachsen (A2, A3) parallel zur Pilzachse (A1) des ersten Aufnahmepilzes (10) ausgerichtet ist, und wobei jeder weitere Aufnahmepilz (11, 12) in einen Schlitz (81) eines separierten Haltekörpers (80) einschiebbar ist.

15. **Motorrad** mit einer Gepäckhaltevorrichtung (1) nach einem der vorhergehenden Ansprüche, wobei der erste Aufnahmepilz (10) permanent am Motorrad festgelegt ist, und wobei der Grundkörper (20) permanent an einem Gepäckstück (100) festgelegt ist.

## Claims

1. Cargo holding device (1) for the temporary fastening of pieces of luggage (100), particularly of trunks, side boxes or bags, on a motor bicycle, with
- a first receiving knob (10) with a knob axis (A1) and for permanent fixing to a motor bicycle,
- a basic body (20) for permanent fixing to a piece of luggage (100),
-- wherein the basic body (20) forms a first slit (30) with an undercut on both sides (51), wherein the first end (31) of the first slit (30) is formed open and the second end (32) closed, and
-- wherein the first receiving knob (10) can be inserted in a form locking manner transversely with relation to its knob axis (A1) from the first end (31) until the second end (32) into the first slit (30),
- wherein the cargo holding device (1) has a locking element (40), which is mounted rotatably on the basic body (20) around a rotational axis (R1), which is directed parallel to the knob axis (A1) of the first receiving knob (10), and which has a locking section (41) with which the locking element (40) in a locking position (S1) can be brought into engagement with the first receiving knob (10) and the first receiving knob (10) can be stopped at the second end (32) of the slit (30),
**characterised in that** the locking section (41) has a recess (45) with which the first receiving knob (10) in the locking position (S1) can be encompassed together with the second end (32) of the first slit (30) in a form locking manner.

2. Cargo holding device (1) according to one of the preceding claims, **characterised in that** the locking element (40) has an operating section (42) with which the locking element (40) can be rotated around the rotational axis (R1) from the locking position (S1) into a disengaged position (S2).

3. Cargo holding device (1) according to claim 2, **characterised in that** the operating section (42) protrudes from the basic body (20) in particular in the plane normal to the rotational axis (R1).

4. Cargo holding device (1) according to one of the preceding claims, **characterised in that** the locking element (40) can be rotated on the plane of the first slit (30) around the rotational axis (R1).

5. Cargo holding device (1) according to one of the preceding claims, **characterised in that** the undercut (51) formed from the first slit (30) has in the region of the locking element (40) a recess (52) in which the locking element (40) lies in the locking position (S1) and fits to the undercut (51).

6. Cargo holding device (1) according to one of claims 1 to 3, **characterised in that** the locking element (40) on one plane adjacent to the first slit (30) can be rotated around the rotational axis (R1), and the first receiving knob (10) has a pin like extension (14) at the free end which protrudes into the plane of the locking element (40).

7. Cargo holding device (1) according to one of the preceding claims, **characterised in that** the locking element (40) is force-loaded with a spring (43) in the direction of the locking position (S1).

8. Cargo holding device (1) according to one of the preceding claims, **characterised in that** the locking element (40) has an unlocking ramp (44), which spans the first slit (30) in the locking position (S1) in the direction of the first end (31) in such a manner that the locking element (40) can be turned around the rotational axis (R1) into the disengaged position (S2) by means of the first receiving knob (10) being inserted into the first slit (30).

9. Cargo holding device (1) according to one of the preceding claims, **characterised in that** the locking element (40), in a region lying between the locking section (41) and the rotational axis (R1), has a fastening point (60) for a pulling means (61).

10. Cargo holding device (1) according to one of the preceding claims, **characterised in that** the locking element (40) can be blocked by means of a locking element (70) with respect to a rotation around the rotational axis (R1).

11. Cargo holding device (1) according to claim 10, **characterised in that** the locking element (70) has a bolt (71a) which can be moved along a direction parallel to the rotational axis (R1).

12. Cargo holding device (1) according to claim 10, **characterised in that** the locking element (70) has a latch (71b) which can be rotated around an axis (R2) parallel to the rotational axis (R1).

13. Cargo holding device (1) according to one of claims 10 to 12, **characterised in that** the locking element (70) has an operating means (72) which is at least partially disposed outside the basic body (20).

14. Cargo holding device (1) according to one of the preceding claims, **characterised in that** said cargo holding device has at least one second reception knob (11, 12) with a knob axis (A2, A3) for permanent fixing to a motor bicycle, wherein each of the knob axes (A2, A3) is positioned parallel to the knob axis (A1) of the first reception knob (10) and wherein each further reception knob (11, 12) can be inserted into a slit (81) of a separated holding body (80).

15. **Motor bicycle** with a cargo holding device (1) according to one of the preceding claims, wherein the first reception knob (10) is permanently fixed to the motor bicycle, and wherein the basic body (20) is permanently fixed to a piece of luggage (100).

## Revendications

1. Dispositif de fixation de bagages (1) destiné à la fixation temporaire de bagages (100), en particuliers de valises, coffres latéraux ou sacoches, sur une moto, avec
- un premier logement en forme de champignon (10) avec un axe de champignon (A1) et destiné à être fixé en permanence à une moto,
- un corps de base (20) destiné à être fixé en permanence à un bagage (100),
dans lequel le corps de base (20) forme une première fente (30) avec une forme rentrante (51) des deux côtés, la première extrémité (31) de la première fente (30) étant réalisée ouverte et la deuxième extrémité (32) étant réalisée fermée, et dans lequel le premier logement en forme de champignon (10) peut être enfoncé dans la première fente (30), et ce transversalement par rapport à son axe de champignon (A1), avec concordance de forme et de la première extrémité (31) à la deuxième extrémité (32),
- lequel dispositif de fixation de bagages (1) comporte un élément de verrouillage (40) qui est monté sur le corps de base (20) de manière à pouvoir tourner autour d'un axe de rotation (R1) orienté parallèlement à l'axe de champignon (A1) du premier logement en forme de champignon (10) et qui comporte une partie de verrouillage (41) avec laquelle l'élément de verrouillage (40) peut être mis en prise avec le premier logement en forme de champignon (10) dans une position de verrouillage (S1) et le premier logement en forme de champignon (10) peut être bloqué au niveau de la deuxième extrémité (32) de la fente (30),
**caractérisé en ce que** la partie de verrouillage (41) présente un creux (45) avec lequel le premier logement en forme de champignon (10) peut être enveloppé par concordance de forme conjointement à la deuxième extrémité (32) de la première fente (30) dans la position de verrouillage (S1).

2. Dispositif de fixation de bagages (1) selon l'une quelconque des revendications précédentes, **caractérisé en ce que** l'élément de verrouillage (40) comporte une partie d'actionnement (42) avec laquelle l'élément de verrouillage (40) peut tourner autour de l'axe de rotation (R1) de la position de verrouillage (S1) à une position de libération (S2).

3. Dispositif de fixation de bagages (1) selon la revendication 2, **caractérisé en ce que** la partie d'actionnement (42) dépasse du corps de base (20), en particulier dans le plan normal à l'axe de rotation (R1).

4. Dispositif de fixation de bagages (1) selon l'une quelconque des revendications précédentes, **caractérisé en ce que** l'élément de verrouillage (40) peut tourner dans le plan de la première fente (30) autour de l'axe de rotation (R1).

5. Dispositif de fixation de bagages (1) selon l'une quelconque des revendications précédentes, **caractérisé en ce que** la forme rentrante (51) réalisée par la première fente (30) comporte dans la zone de l'élément de verrouillage (40) un évidement (52) dans lequel l'élément de verrouillage (40) dans la position de verrouillage (S1) se trouve et complète la forme rentrante (51).

6. Dispositif de fixation de bagages (1) selon l'une quelconque des revendications 1 à 3, **caractérisé en ce que** l'élément de verrouillage (40) peut tourner dans un plan voisin de la première fente (30) autour de l'axe de rotation (R1) et le logement en forme de champignon (10) comporte à l'extrémité libre un prolongement (14) en forme de tenon qui dépasse dans le plan de l'élément de verrouillage (40).

7. Dispositif de fixation de bagages (1) selon l'une quelconque des revendications précédentes, **caractérisé en ce que** l'élément de verrouillage (40) est soumis à une force par un ressort (43) en direction de la position de verrouillage (S1).

8. Dispositif de fixation de bagages (1) selon l'une quelconque des revendications précédentes, **caractérisé en ce que** l'élément de verrouillage (40) comporte une rampe de déverrouillage (44) qui passe par-dessus la première fente (30) dans la position de verrouillage (S1) en direction de la première extrémité (31) de telle sorte que l'élément de verrouillage (40) peut tourner autour de l'axe de rotation (R1) dans la position de libération (S2) suite à l'enfoncement du premier logement en forme de champignon (10) dans la fente (30) à partir de la position de verrouillage (S1).

9. Dispositif de fixation de bagages (1) selon l'une quelconque des revendications précédentes, **caractérisé en ce que** l'élément de verrouillage (40) comporte, dans une zone située entre la partie de verrouillage (41) et l'axe de rotation (R1), un point de fixation (60) destiné à un moyen de traction (61).

10. Dispositif de fixation de bagages (1) selon l'une quelconque des revendications précédentes, **caractérisé en ce que** l'élément de verrouillage (40) peut être bloqué en rotation autour de l'axe de rotation (R1) par un élément de blocage (70).

11. Dispositif de fixation de bagages (1) selon la revendication 10, **caractérisé en ce que** l'élément de blocage (70) comporte un axe (71a) qui est mobile le long d'une direction parallèle à l'axe de rotation (R1).

12. Dispositif de fixation de bagages (1) selon la revendication 10, **caractérisé en ce que** l'élément de blocage (70) comporte un verrou (71b) qui peut tourner autour d'un axe (R2) parallèle à l'axe de rotation (R1).

13. Dispositif de fixation de bagages (1) selon l'une quelconque des revendications 10 à 12, **caractérisé en ce que** l'élément de blocage (70) comporte un moyen d'actionnement (72) qui est agencé au moins en partie en dehors du corps de base (20).

14. Dispositif de fixation de bagages (1) selon l'une quelconque des revendications précédentes, **caractérisé en ce qu'**il comporte au moins un deuxième logement en forme de champignon (11, 12) avec un axe de champignon (A2, A3) en vue d'une fixation permanente à une moto, dans lequel chacun des axes de champignon (A2, A3) est orienté parallèlement à l'axe de champignon (A1) du premier logement en forme de champignon (10) et dans lequel chaque autre logement en forme de champignon (11, 12) peut être enfoncé dans une fente (81) d'un corps de fixation (80) séparé.

15. **Moto** avec un dispositif de fixation de bagages (1) selon l'une quelconque des revendications précédentes, dans lequel le premier logement en forme de champignon (10) est fixé en permanence à la moto et le corps de base (20) est fixé en permanence à un bagage (100).
